# EUROPEAN PATENT APPLICATION

(11) **EP 2 538 252 A2**
(43) Date of publication of application: **26.12.2012**
(21) Application number: 12173005.5
(22) Date of filing: 21.06.2012
(51) Int. Cl.: G02B 6/13

(54) **Optical device and method for manufacturing optical device**

(30) Priority: 22.06.2011 JP 2011138634
(71) Applicant: CITIZEN HOLDINGS CO., LTD., Nishitokyo-shi, Tokyo 188-8511 (JP)
(72) Inventor: Ide, Masafumi, Tokyo Tokyo 188-8511 (JP); Komiyama, Takeo, Tokyo Tokyo 188-8511 (JP); Nozaki, Takaaki, Tokyo Tokyo 188-8511 (JP)
(74) Representative: Patentanwälte Ruff, Wilhelm, Beier, Dauster & Partner

(57) **Abstract**

An object of the invention is to provide an optical device and an optical device manufacturing method wherein provisions are made to be able to substantially prevent misalignment from occurring in an optical element and prevent shifting from occurring in the optical waveguide characteristics of the optical element. The optical device includes a first optical element, a second optical element optically coupled to the first optical element, and a first silicon substrate on which the first optical element and the second optical element are mounted, wherein the second optical element includes a second silicon substrate and a waveguide substrate laminated to the second silicon substrate, and the second optical element is mounted on the first silicon substrate in such a manner that the waveguide substrate faces the first silicon substrate.

## Description

### CROSS-REFERENCE TO RELATED APPLICATIONS

This application is a new U.S. patent application that claims benefit of JP 2011-138634, filed on June 22, 2011, the entire content of JP 2011-138634 is hereby incorporated by reference.

### TECHNICAL FIELD

The present invention relates to an optical device manufactured by bonding an optical element with an optical waveguide formed therein to a substrate, and a method for manufacturing such an optical device.

### BACKGROUND

Short-wavelength laser light sources have been commercially implemented in a wide variety of applications ranging from laser projectors to high-density optical storage devices. The short-wavelength laser light source produces laser light in blue or green or other color by using a wavelength conversion device in which infrared light at the fundamental oscillation wavelength of a laser device as an optical device is converted into light at the second harmonic wavelength. The wavelength conversion device here is formed using a crystal material such as LN (lithium niobate: LiNbO3) or LT (lithium tantalate).

It is known to provide a method for manufacturing a wavelength conversion device by laminating a MgO-doped LN substrate to a base substrate of LN and thereafter polishing the MgO-doped LN substrate (for example, refer to Patent Document 1). In Patent Document 1, it is shown that the chance of delamination of the substrate and the increase in transmission loss which may occur due to differences in thermal expansion are suppressed because the thermal expansion coefficient of the MgO-doped LN substrate is substantially the same as that of the base substrate formed from LN.

It is also known to provide a laser light source manufactured by mounting the above-described wavelength conversion device on a silicon substrate together with the laser device (for example, refer to Patent Document 2).

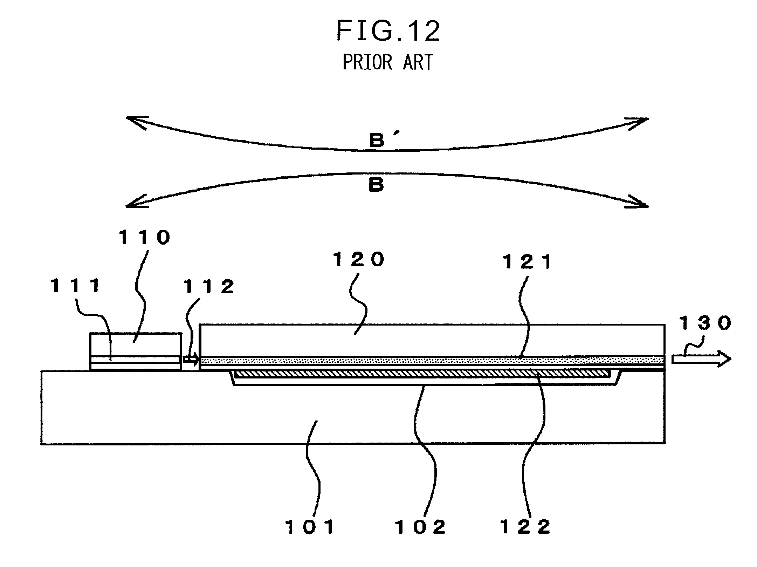

Figure 12 is a diagram showing one example of the short-wavelength laser light source disclosed in Patent Document 2. In Figure 12, reference numeral 101 is a silicon substrate, 110 is a semiconductor laser, and 120 is a wavelength conversion device formed from LN. Laser light 112 at the fundamental wavelength is emitted from the active layer 111 of the semiconductor laser 110 and introduced into an optical waveguide 121 formed in the wavelength conversion device 120, and blue laser light 130 at the second harmonic wavelength is output. A groove 102 is formed in a portion of the surface where the silicon substrate 101 contacts the wavelength conversion device 120. A thin-film heater 122 of a Ti film is formed on the underside of the wavelength conversion device 120, that is, in close proximity to the optical waveguide 121. In Patent Document 2, it is shown that the wavelength conversion device 120 can be maintained at a desired temperature by energizing the thin-film heater 122.

Patent Document 1: JP-2007-183316-A (pages 13 to 15, Figures 6 and 7)
Patent Document 2: JP-H06-338650-A (page 5, Figure 5)

### SUMMARY

If the wavelength conversion device disclosed in Patent Document 1 is mounted on the silicon substrate as described in Patent Document 2, there arises the problem that the conversion wavelength of the wavelength conversion device changes. The thermal expansion coefficient of the wavelength conversion device manufactured by laminating the MgO-doped LN substrate to the base substrate of LN is significantly different from that of the silicon substrate. Therefore, when the ambient temperature changes, the length of the wavelength conversion device and the length of the silicon substrate change at different rates, causing stress to the wavelength conversion device and resulting in faults such as deformation, distortion, misalignment, etc. of the wavelength conversion device.

The wavelength conversion device formed principally of LN has a large thermal expansion coefficient, so that its longitudinal length increases as the temperature rises. On the other hand, the thermal expansion coefficient of the silicon substrate is small, and its longitudinal length does not increase much even if the temperature rises. As a result, when the temperature rises, a stress such as shown by arrow B in Figure 12 occurs in the laser light source, causing the wavelength conversion device 120 to bulge. On the other hand, when the temperature lowers, the wavelength conversion device shrinks longitudinally; as a result, a reverse stress as shown by arrow B' in Figure 12 occurs in the laser light source, causing the wavelength conversion device 120 to contract inwardly. Such deformation results in a misalignment in optical coupling between the wavelength conversion device 120 and the semiconductor laser 110, thus causing the conversion wavelength of the wavelength conversion device to shift.

It is an object of the present invention to provide an optical device and an optical device fabrication method that solve the above problem.
It is also an object of the present invention to provide an optical device and an optical device fabrication method wherein provisions are made to be able to substantially prevent misalignment from occurring in an optical element and prevent shifting from occurring in the optical waveguide characteristics of the optical element.
It is a further object of the present invention to provide an optical device and an optical device fabrication method that make it possible to integrate a plurality of optical elements on a silicon substrate while making provisions to substantially prevent misalignment from occurring in the optical elements and prevent shifting from occurring in the optical waveguide characteristics of the optical elements.

There is provided an optical device includes a first optical element, a second optical element optically coupled to the first optical element, and a first silicon substrate on which the first optical element and the second optical element are mounted, wherein the second optical element includes a second silicon substrate and a waveguide substrate laminated to the second silicon substrate, and the second optical element is mounted on the first silicon substrate in such a manner that the waveguide substrate faces the first silicon substrate.

Preferably, the optical device further includes a bonding portion formed from a metal material and provided on the first silicon substrate, and the second optical element is bonded to the bonding portion by using a surface activated bonding technique.

Preferably, in the optical device, the bonding portion has a micro-bump structure.

Preferably, in the optical device, the metal material is Au.

Preferably, in the optical device, the first optical element is a laser device, and the second optical element is a wavelength conversion device.

There is also provided a method for manufacturing an optical device in which a first optical element and a second optical element optically coupled to the first optical element are mounted on a first silicon substrate, the method includes forming the second optical element by laminating together a second silicon substrate and a waveguide substrate, mounting the first optical element on the first silicon substrate, and mounting the second optical element on the first silicon substrate in such a manner that the waveguide substrate faces the first silicon substrate.

Preferably, the optical device fabrication method further includes forming on the first silicon substrate a bonding portion formed from a metal material, wherein when mounting the second optical element, the second optical element is bonded to the bonding portion by using a surface activated bonding technique.

Preferably, in the optical device fabrication method, the bonding portion has a micro-bump structure.

Preferably, in the optical device fabrication method, the metal material is Au.

Preferably, in the optical device fabrication method, the first optical element is a laser device, and the second optical element is a wavelength conversion device.

According to the optical device and the method for manufacturing the optical device, the waveguide substrate corresponding to the second optical element is sandwiched between the first silicon substrate and the second silicon substrate. With this structure, if the amount of deformation that the second optical element suffers due to a change in ambient temperature is different from the amount of deformation that the first and second silicon substrates suffer, the waveguide substrate corresponding to the second optical element can be substantially prevented from deforming due to the temperature change. It thus becomes possible to substantially prevent misalignment from occurring in the second optical element and prevent shifting from occurring in the optical waveguide characteristics of the second optical element, and thus a high-performance and high-reliability optical device that is resistant to ambient temperature changes can be provided.

Further, the first silicon substrate includes a bonding portion having a micro-bump structure formed from Au, and the first optical element and the second optical element are both bonded to the first silicon substrate by using the technique of surface activated bonding. As a result, according to the optical device and the method for manufacturing the optical device, since the bonding can be accomplished without applying heat, component breakage due to the residual stress arising from the difference in thermal expansion coefficient does not occur and, since no thermal stress is present, component functional degradation does not occur, nor does any misalignment of components occur during mounting.

Furthermore, since the bonding portion having the micro-bump structure and the interconnection pattern, etc. can be formed together in an efficient manner on the surface of the first silicon substrate, an optical device in which a plurality of optical elements are efficiently integrated on a silicon substrate can be easily realized.

### BRIEF DESCRIPTION OF THE DRAWINGS

These and other features and advantages of the present invention will be better understood by reading the following detailed description, taken together with the drawings wherein:

Figure 1 is a schematic perspective view showing the construction of an optical device 1;
Figure 2 is an exploded perspective view of the optical device 1 of Figure 1;
Figure 3 is a cross-sectional view of the optical device 1 taken along line AA' of Figure 1;
Figure 4 is a diagram for explaining the fabrication process of the optical device 1 of Figure 1;
Figure 5(a) is a diagram showing one example of a comb electrode pattern, and Figure 5(b) is a diagram showing one example of the formation of polarized regions after polarization;
Figures 6(a) and 6(b) are diagrams each illustrating a setup for applying a polarization reversing voltage to a waveguide substrate 30 of a wavelength conversion device 20 in a periodic polarization reversal step S9;
Figure 7 is a perspective view of the wavelength conversion device 20 completed by forming grooves;
Figures 8(a) to 8(f) are process diagrams showing one example of a process sequence for forming bonding portions for the optical device 1;
Figure 9 is a perspective view showing a portion of the bonding portion 40 or 41 in enlarged form;
Figures 10(a) and 10(b) are side views for explaining a mounting process for mounting a laser device and the wavelength conversion device on a first silicon substrate;
Figure 11 is a schematic perspective view showing another optical device 50; and
Figure 12 is a diagram showing one example of a short-wavelength laser light source disclosed in Patent Document 2.

### DESCRIPTION OF EMBODIMENTS

An optical device and a method for manufacturing the optical device will be described below with reference to drawings by taking as an example the case where the optical device incorporates a wavelength conversion device that converts incident light into its second harmonic. It should, however, be understood that the present invention is not limited to the drawings, nor is it limited to any particular embodiment described herein.

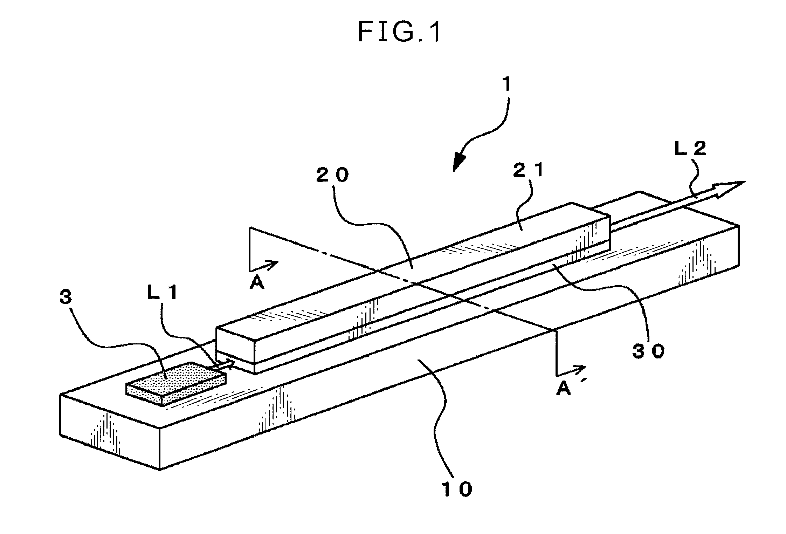

Figure 1 is a schematic perspective view showing the construction of an optical device 1.

The optical device 1 comprises a plate-like first silicon substrate 10, a laser device 3 as a first optical element mounted on the first silicon substrate 10, and a wavelength conversion device 20 as a second optical element mounted on the first silicon substrate 10 and optically coupled to the laser device 3. The wavelength conversion device 20 includes a second silicon substrate 21 and a waveguide substrate 30 laminated thereto by interposing a prescribed layer therebetween. The detailed structure of the wavelength conversion device 20 will be described later.

An overview of the operation of the optical device 1 will be given below.

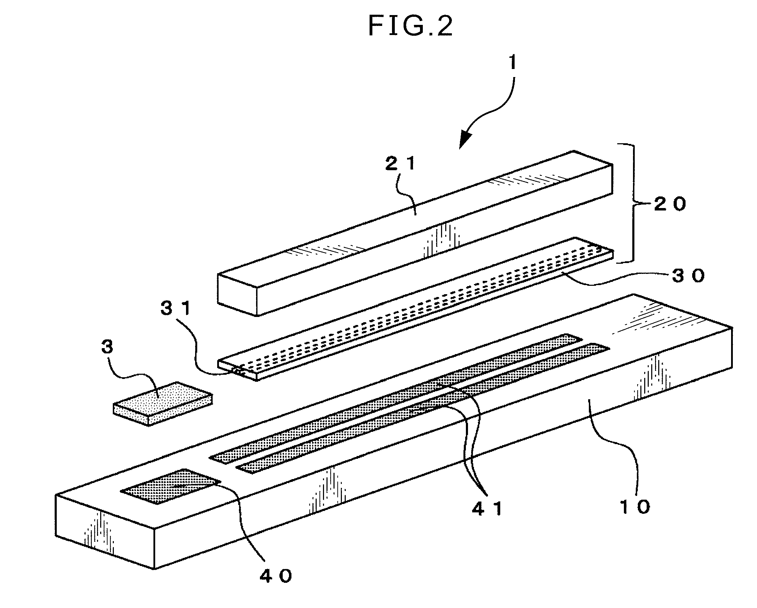

In Figure 1, the laser device 3 emits infrared light L1 at its fundamental wavelength when a drive voltage is supplied from the first silicon substrate 10 by a means not shown. When the infrared light L1 is introduced into an optical waveguide 31 (see Figure 2) formed within the waveguide substrate 30 of the wavelength conversion device 20, the infrared light is converted into its harmonic as it is passed through the optical waveguide, and green or blue laser light L2 emerges from an exit face on the opposite side of the waveguide substrate 30. The laser light L2 emerging from the waveguide substrate 30 is transmitted to an external optical system by such means as an optical fiber not shown, but the description of the external optical system will not be given herein.

In one example, the laser device 3 emits infrared light L1 of wavelength 1064 nm, and the wavelength conversion device 20 converts the infrared light L1 of wavelength 1064 nm into green laser light L2 having a wavelength of 532 nm. In another example, the laser device 3 emits infrared light L1 of wavelength 860 nm, and the wavelength conversion device 20 converts the infrared light L1 of wavelength 860 nm into blue laser light L2 having a wavelength of 430 nm. Since the optical device 1 can emit green laser light of wavelength 532 nm or blue laser light of wavelength 430 nm, as described above, the optical device 1 can be used as a light source for a compact color projector that uses a three-color laser light source.

Figure 2 is an exploded perspective view of the optical device 1.

In Figure 2, an integrated circuit having circuit elements, interconnections, etc. can be formed within the first silicon substrate 10, though not shown here. On the other hand, bonding portions 40 and 41 for mounting the laser device 3 and the wavelength conversion device 20, respectively, are formed on the surface of the first silicon substrate 10. The bonding portions 40 and 41 each have a micro-bump structure formed from a metal material, but the detailed structure will be described later.

The laser device 3 is a semiconductor laser that emits infrared light or the like, and is mounted on the surface of the first silicon substrate 10 via the bonding portion 40.

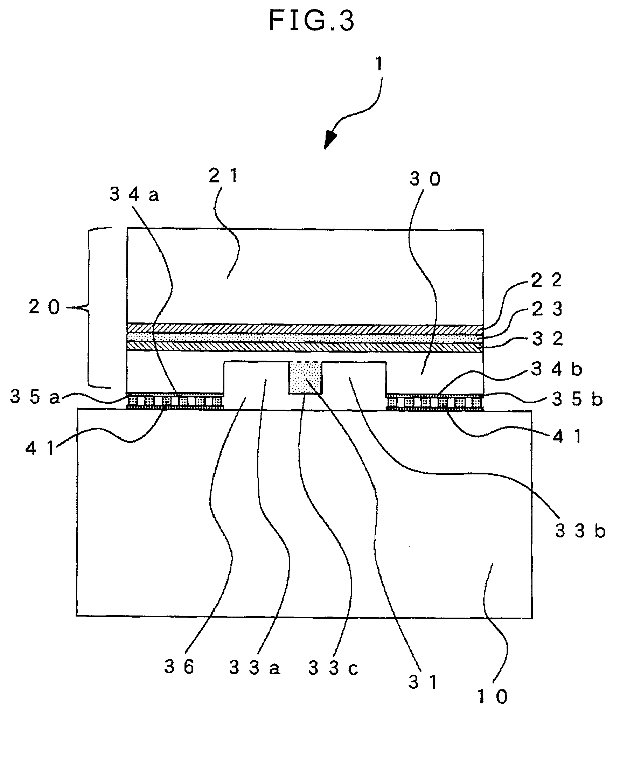

The second silicon substrate 21 of the wavelength conversion device 20 is an elongated rectangular silicon plate whose width and length are substantially the same as the width and length of the waveguide substrate 30, and is bonded to the waveguide substrate 30 by interposing an adhesive layer 23 (see Figure 3) therebetween.

The waveguide substrate 30 is a thin elongated rectangular plate formed principally of LN (lithium niobate: LiNbO3), a ferroelectric single crystal, doped with MgO, and the optical waveguide 31 is formed extending longitudinally substantially along the center axis of the waveguide substrate 30. The wavelength conversion device 20 is manufactured by bonding the waveguide substrate 30 to the second silicon substrate 21, and is mounted on the surface of the first silicon substrate 10 via the bonding portion 41.

As shown in Figure 2, the wavelength conversion device 20 is mounted on the first silicon substrate 10 in such a manner that the waveguide substrate 30 faces the first silicon substrate 10. The waveguide substrate 30 is thus sandwiched between the first silicon substrate 10 and the second silicon substrate 21.

Figure 3 is a cross-sectional view of the optical device 1 taken along line AA' of Figure 1.

The wavelength conversion device 20 has a ridge-shaped structure, and is manufactured by laminating the second silicon substrate 21 and the waveguide substrate 30 together, as described above. A transparent electrode 22 is formed on the underside of the second silicon substrate 21, as viewed in the figure, and an insulating layer 32 is formed on the surface of the waveguide substrate 30 that faces the second silicon substrate 21. The wavelength conversion device 20 is formed in an integral one-piece structure with the transparent electrode 22 of the second silicon substrate 21 and the insulating layer 32 of the waveguide substrate 30 bonded together by the adhesive layer 23.

Two grooves 33a and 33b are formed in the lower portion of the waveguide substrate 30, as viewed in the figure, along the longitudinal direction of the waveguide substrate 30, and the optical waveguide 31 is formed in a raised portion 33c extending between the grooves 33a and 33b. In this way, the optical waveguide 31 is formed on the lower surface facing the first silicon substrate 10, so as to extend longitudinally substantially along the center axis of the wavelength conversion device 20. As earlier described, the waveguide substrate 30 has the function of converting the infrared light L1, emitted from the laser device 3 (see Figure 1) and introduced into the optical waveguide 31, into its harmonic for output.

Au films 35a and 35b are formed on left and right planar portions 34a and 34b, respectively, of the lower surface of the waveguide substrate 30, as viewed in the figure. The Au films 35a and 35b are thus formed on the underside of the wavelength conversion device 20.

The bonding portion 41 is formed on the upper surface of the first silicon substrate 10 in such a manner as to face the Au films 35a and 35b formed on the wavelength conversion device 20. The bonding portion 41 has a micro-bump structure, as earlier stated, and is formed from Au (gold) which is a metal material having good electric conductivity and good thermal conductivity.

When the Au films 35a and 35b formed on the underside of the wavelength conversion device 20 are aligned with the bonding portion 41 on the first silicon substrate 10 and are pressed thereon, the first silicon substrate 10 and the wavelength conversion device 20 are bonded together by surface activation. In this way, the wavelength conversion device 20 is mounted on the first silicon substrate 10 with the optical waveguide 31 facing (that is, placed face down on) the first silicon substrate 10, that is, with the optical waveguide 31 placed in close proximity to the first silicon substrate 10. Since the bonding portion 41 is formed from Au having good electric conductivity and good thermal conductivity, the wavelength conversion device 20 and the first silicon substrate 10 are mechanically, electrically, and thermally bonded together in a reliable manner.

The grooves 33a and 33b form an air layer 36 between the wavelength conversion device 20 and the first silicon substrate 10 so that the optical waveguide 31 formed in the lower portion of the wavelength conversion device 20 does not contact the first silicon substrate 10. The left and right sides and the underside of the optical waveguide 31 are covered with the air layer 36. With this structure, light can be confined within the optical waveguide 31 by utilizing the difference in refractive index between the air layer 36 and the optical waveguide 31.

Not only the grooves 33a and 33b but also the micro-bump structure of the bonding portion 41 also contributes to the formation of the air layer 36. The wavelength conversion device 20 and the first silicon substrate 10 are bonded together by the micro-bump structure of the bonding portion 41. Since the micro-bump structure has a prescribed thickness, the wavelength conversion device 20 is bonded to the first silicon substrate 10, one separated from the other by a distance equal to the thickness of the micro-bump structure. In this way, the micro-bump structure of the bonding portion 41 having the prescribed thickness not only has the function of bonding the wavelength conversion device 20 and the first silicon substrate 10 together but also has the function of forming the air layer 36 around the optical waveguide 31.

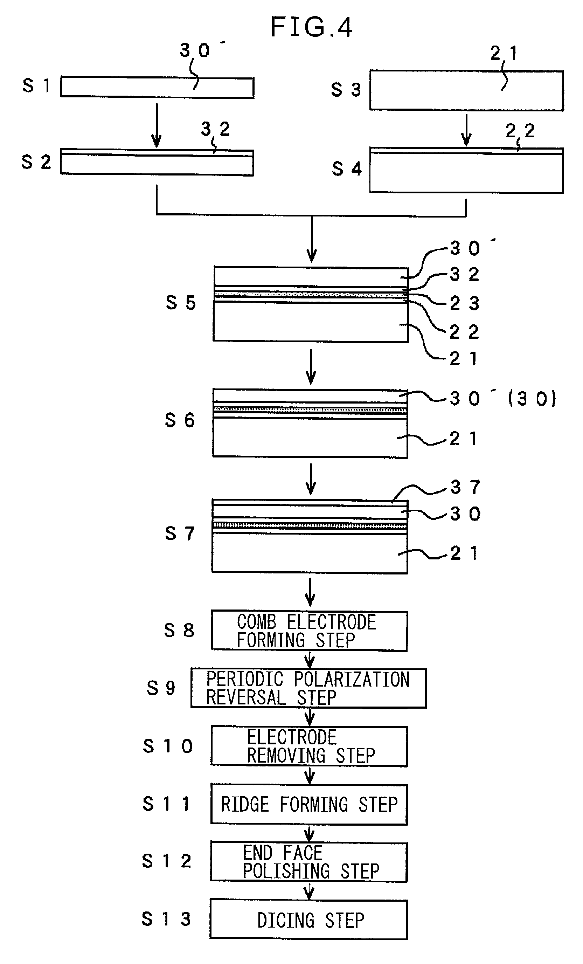

Figure 4 is a process diagram for explaining a method for manufacturing the wavelength conversion device.

One example of the method for manufacturing the wavelength conversion device will be described below with reference to the process diagram of Figure 4. In step S1, a ferroelectric single-crystal substrate 30' with a thickness of about 0.5 mm is prepared. The ferroelectric single-crystal substrate 30' can be formed using LN doped with MgO, but it is also possible to use LT (lithium tantalate) doped with MgO or a KTP crystal.

Next, in step S2, the insulating film 32 is formed on one surface of the ferroelectric single-crystal substrate 30'. The insulating film 32 here is formed by vapor-depositing SiO₂ to a thickness of 0.5 µm. Preferably, the thickness of the SiO₂ film is in the range of 0.1 to 1.0 µm.

In step S3, the second silicon substrate 21 with a thickness of about 1 mm is prepared.
Preferably, the thickness of the second silicon substrate 21 is in the range of 30 µm to 1.0 mm. Further, the thickness of the first silicon substrate 10 is 625 µm. Preferably, the thickness of the first silicon substrate 10 is in the range of 100 µm to 700 µm.

Next, in step S4, the transparent electrode 22 is formed on one surface of the second silicon substrate 21. The transparent electrode 22 here is formed by vapor-depositing InTiO to a thickness of 0.05 µm. The transparent electrode 22 can be formed using InTiO, ITO, ZnO, AZO, GZO, etc., among which ITO and InTiO having good transparency and good electric conductivity are preferred. Preferably, the thickness of the transparent electrode 22 is in the range of 0.02 to 1.0 µm. The transparent electrode 22 can be formed not only by vapor deposition but also by ion plating or by sputtering.
The InTiO film is a film of indium oxide doped with Ti. In the case of an SHG wavelength conversion device that converts near-infrared light at a longer wavelength than 1.2 µm, for example, near-infrared light at 1.26 µm, into visible light of wavelength 0.63 µm, an ITO film may be used, but an InTiO film is more preferred for use. The reason is that the InTiO film has a higher transmissivity and lower absorptivity than the ITO film in the longer wavelength region, while retaining about the same electric conductivity as that of the ITO film.

Next, in step S5, while holding the ferroelectric single-crystal substrate 30' with its insulating film 32 facing the transparent electrode 22 formed on the second silicon substrate 21, the two substrates are bonded together by the adhesive layer 23. The adhesive layer 23 is formed from a polyimide-based adhesive material and has a thickness of 0.5 µm. Preferably, the thickness of the adhesive layer 23 is in the range of 0.2 to 1.0 µm. Rather than using the adhesive layer 23, use may be made of a surface activated bonding technique in which the surface of the insulating film 32 and the surface of the transparent electrode 22 on the second silicon substrate 21 are activated by plasma and then bonded together. This step S5 is the laminating step for forming the second optical element. In the earlier described step S4, it has been described that the transparent electrode 22 is formed on the surface of the second silicon substrate 21. However, rather than forming the transparent electrode 22, the second silicon substrate 21 may be formed from a low-resistance silicon substrate heavily doped with phosphorus or boron and, instead of the transparent electrode 22, the silicon substrate itself may be used as the substrate-side electrode opposing the counter electrode 39.

Next, in step S6, the second silicon substrate 21 is bonded to a polishing substrate (not shown), and the ferroelectric single-crystal substrate 30' is reduced in thickness by grinding and polishing. In this step S6, the thickness of the ferroelectric single-crystal substrate 30', initially about 0.5 mm thick, is reduced to 3 µm. The thickness of the ferroelectric single-crystal substrate 30' is preferably in the range of 2.5 to 5.0 µm, but the thickness is determined suitably according to the use. The thinned ferroelectric single-crystal substrate 30' is used as the waveguide substrate 30. The waveguide substrate 30 is thus formed as an extremely thin substrate by grinding and polishing.
Since, preferably, the thickness of the second silicon substrate 21 is in the range of 30 µm to 1.0 mm, the thickness of the waveguide substrate 30 is in the range of 1/6 to 1/400 of the thickness of second silicon substrate 21.

Next, in step S7, a thin film 37' for forming a polarization reversing comb electrode 37 to be described later is formed on the surface of the thinned ferroelectric single-crystal substrate 30', that is, the waveguide substrate 30. The thin film 37' is formed by vapor-depositing Ta (tantalum) to a thickness of 0.1 µm uniformly over the surface of the waveguide substrate 30. The thickness of the thin film 37' is preferably in the range of 0.01 to 2.0 µm.

Next, in step S8, a mask film is formed on the thin film 37', and etching is performed by using the mask patterned so as to be able to form the desired polarization reversing comb electrode (comb electrode forming step).

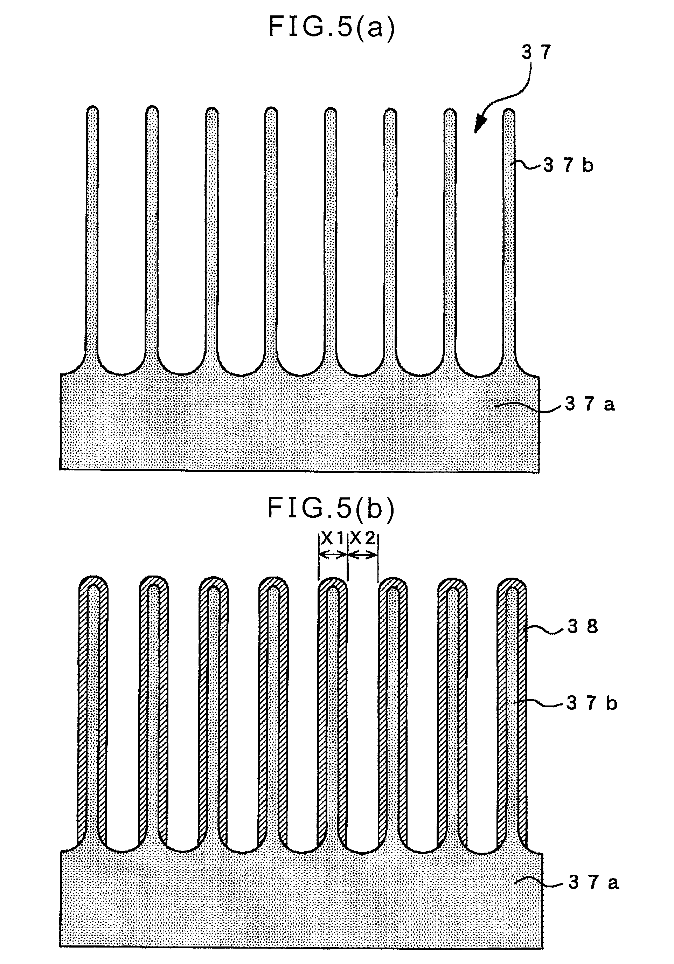

Figure 5 is an enlarged plan view showing the comb electrode 37 formed by the comb electrode forming step S8: Figure 5(a) shows one example of the comb electrode pattern, and Figure 5(b) shows one example of the formation of polarized regions after polarization.

In Figure 5(a), the comb electrode 37 includes a comb electrode body 37a and a plurality of comb electrode teeth 37b branching out from the comb electrode body 37a. The width, length, pitch, and other dimensions of the comb electrode teeth 37b are suitably determined according to the polarization reversal and desired phase matching conditions.

Figure 5(b) shows polarization reversed regions 38 formed by polarization. The width X1 of each polarization reversed region 38 becomes larger than the width of each comb electrode tooth 37b, but the polarization reversal conditions should be determined so that the width X1 of each polarization reversed region 38 becomes substantially equal to the width X2 between each polarization reversed region 38, as illustrated.

Next, in step S9, polarization reversal is performed by applied a prescribed voltage to the comb electrode 37 formed on the waveguide substrate 30 (periodic polarization reversal step).

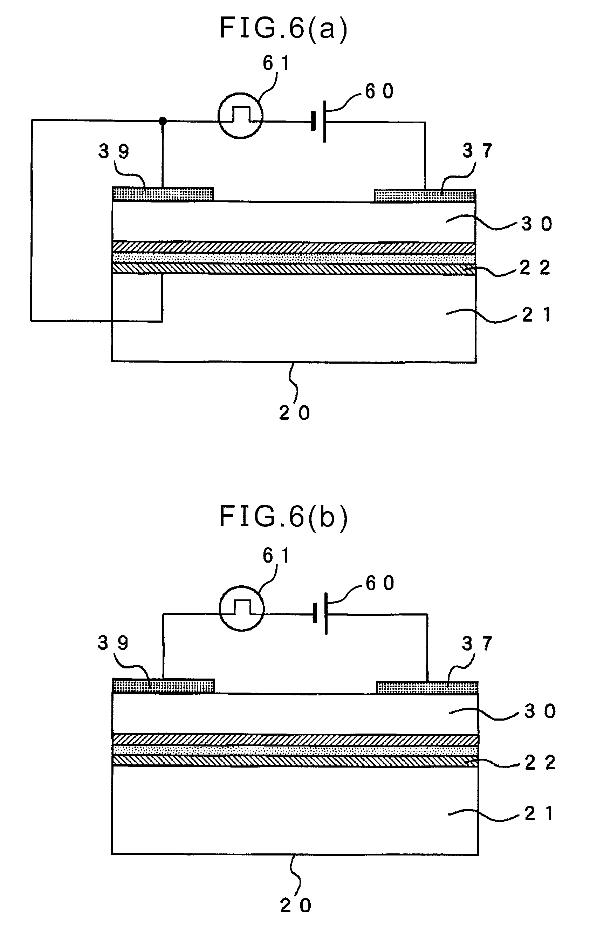

Figures 6(a) and 6(b) are diagrams each illustrating a setup for applying a polarization reversing voltage to the waveguide substrate 30 of the wavelength conversion device 20 in the periodic polarization reversal step S9.

In the method of Figure 6(a), the negative terminal of a DC voltage power supply 60 (output voltage: 250 to 600 V) is connected to both the counter electrode 39 and the transparent electrode 22, and the positive terminal is connected to the comb electrode 37. On the other hand, a pulse voltage from a pulse voltage power supply 61 (output voltage: 100 to 500 V) is applied to the counter electrode 39 and the comb electrode 37. It is to be understood here that the counter electrode 39 is formed on the waveguide substrate 30 simultaneously with the comb electrode 37 in the preceding steps S7 and S8. The pulse duration of the pulse voltage can be suitably chosen from within the range of sub-milliseconds to several tens of milliseconds.

In the method of Figure 6(b), the negative terminal of the DC voltage power supply 60 (output voltage: 250 to 600 V) is connected to the counter electrode 39, and the positive terminal is connected to the comb electrode 37. The pulse voltage from the pulse voltage power supply 61 (output voltage: 100 to 500 V) is applied to the counter electrode 39 and the comb electrode 37. No voltage is applied to the transparent electrode 22. By thus applying the voltage using the setup illustrated in Figure 6(a) or 6(b), the periodic polarization reversal structure (see Figure 5(b)) can be obtained.

Next, in step S10, the voltage application comb electrode 37 and counter electrode 39 formed as earlier described are removed (electrode removing step).

Next, in step S11, two grooves are formed in the surface of the waveguide substrate 30 by dry etching (ridge forming step). It is possible to form the two grooves by laser machining.

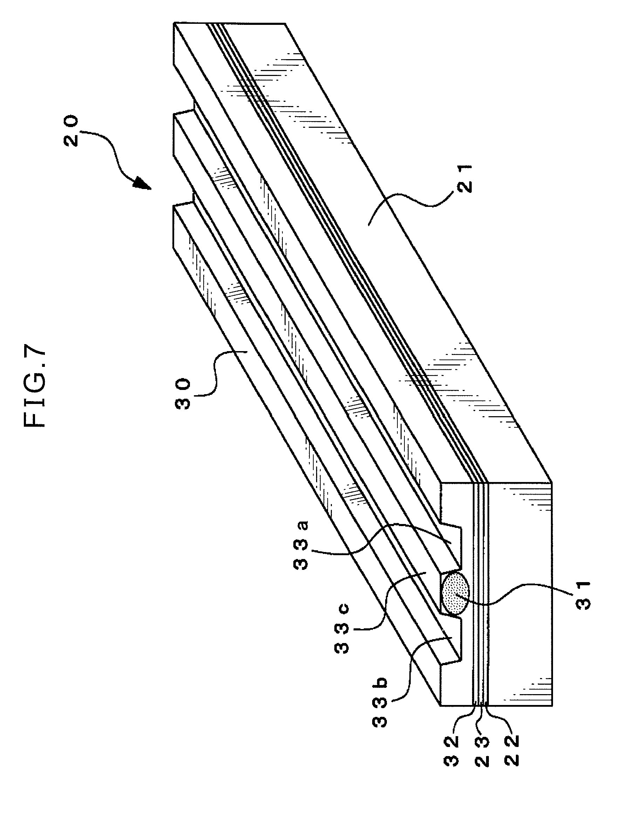

Figure 7 is a perspective view of the wavelength conversion device 20 completed by forming the grooves.

In Figure 7, the two grooves 33a and 33b are formed in the surface of the waveguide substrate 30 of the wavelength conversion device 20 so as to extend along the longitudinal direction thereof with the grooves separated from each other by a prescribed distance. The formation of the two grooves 33a and 33b results in the formation of the raised portion 33c between the grooves 33a and 33b, and this raised portion 33c serves as the optical waveguide 31. Further, as earlier described, the insulating film 32, the adhesive layer 23, and the transparent electrode 22, in this order as viewed from the top of the figure, are formed between the waveguide substrate 30 and the second silicon substrate 21. In Figure 7, the waveguide substrate 30 is shown face up as if it lies above the second silicon substrate 21, but actually, the waveguide substrate 30 of the wavelength conversion device 20 is bonded face-to-face to the first silicon substrate 10, as previously illustrated in Figure 3. Therefore, the wavelength conversion device 20 shown in Figure 7 is turned upside down (face down) for bonding to the first silicon substrate 10.

Next, in step S12, if the wavelength conversion device is one manufactured on each of multiple chips to be diced from a wafer, the outside comb electrode body (not shown) is removed by cutting, and the end face through which the infrared light from the laser device 3 enters and the end face from which the light emerges are polished (end face polishing step).

Next, in step S13, if the wavelength conversion device is one manufactured on each of multiple chips to be diced from a wafer, each individual wavelength conversion device 20 is separated by dicing, to complete the fabrication of the wavelength conversion device 20 (dicing step). With the above steps, the wavelength conversion device 20 manufactured by laminating the thinned waveguide substrate 30 to the second silicon substrate 21 can be completed. If the wavelength conversion device is one manufactured as a discrete component, the above steps S12 and S13 are omitted.

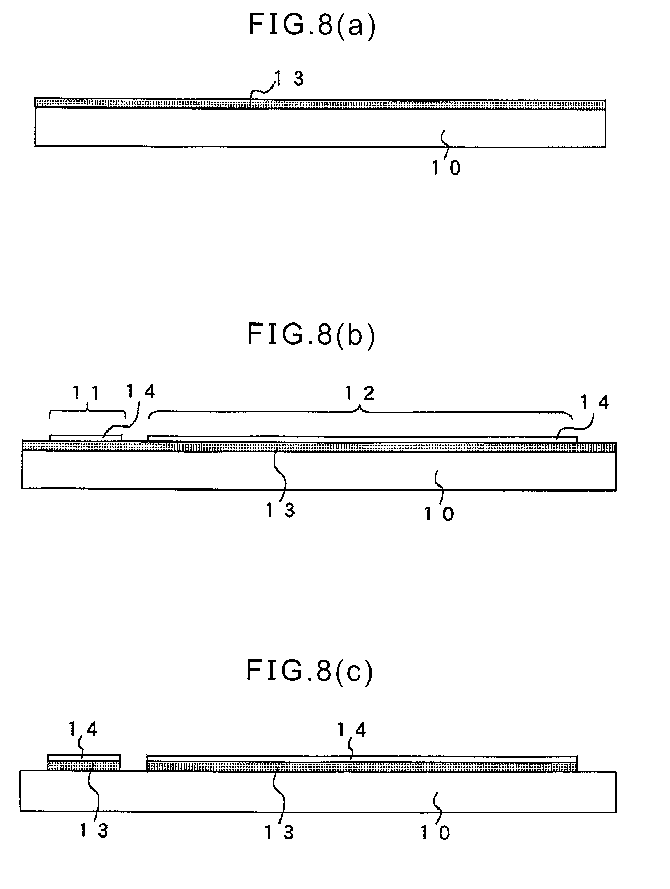

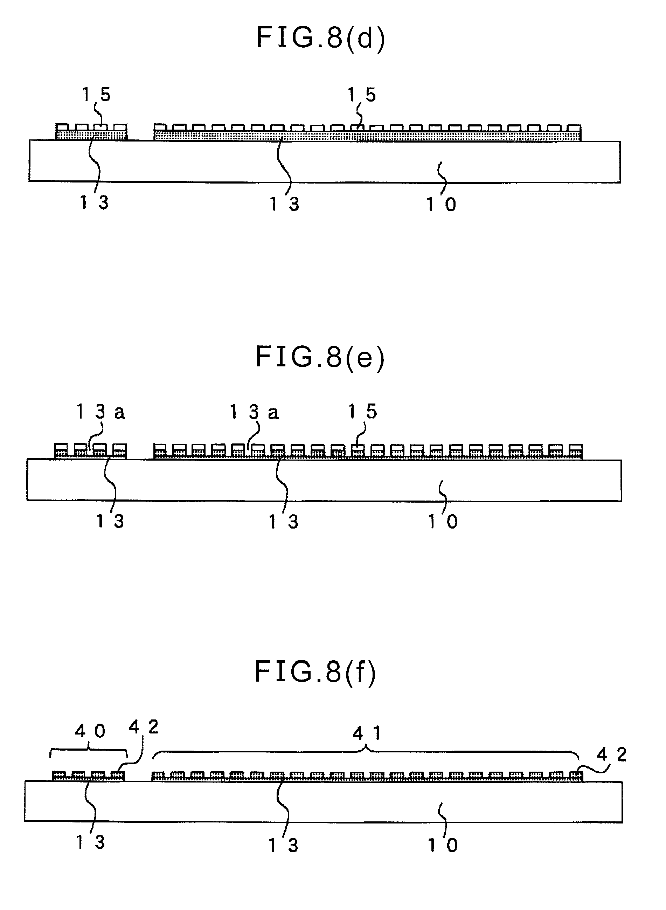

Figure 8 is a process diagram showing one example of a process sequence for forming the bonding portions for the optical device 1. Each individual diagram in Figure 8 shows a cross section of the first silicon substrate 10 of Figure 2 taken along the longitudinal direction thereof.

In the step of Figure 8(a), an Au film 13 of gold as a metal material is formed on the surface of the first silicon substrate 10 (Au film forming step) that has been planarized in the CMOS-LSI forming process.

Next, in the step of Figure 8(b), a resist film 14 is formed for leaving the Au film 13 as electrodes in a laser device mounting region 11 where the laser device 3 is to be mounted and a wavelength conversion device mounting region 12 where the wavelength conversion device 20 is to be mounted. That is, the bonding portions 40 and 41 are formed in the laser device mounting region 11 and the wavelength conversion device mounting region 12, respectively.

Then, in the step of Figure 8(c), etching is performed to form electrodes by removing the portions of the Au film 13 that are not covered with the resist film 14. The unremoved portions of the Au film 13 are thus formed as the electrodes in the laser device mounting region 11 and the wavelength conversion device mounting region 12.

Then, in the step of Figure 8(d), after removing the resist film 14, a resist film 15 for forming micro bumps is formed on the surface of the Au film 13 left as the electrodes in the laser device mounting region 11 and the wavelength conversion device mounting region 12. The resist film 15 has a pattern in which a large number of substantially circular tiny dots are arranged when viewed from the top thereof.

Next, in the step of Figure 8(e), half etching is performed to form a groove 13a to a prescribed depth in the Au film 13 left in each interstice of the dot pattern of the resist film 15.

Then, in the step of Figure 8(f), the resist film 15 is removed. As a result, a large number of micro bumps 42 arranged in the dot pattern defined by the grooves 13a are formed on the surface of the Au film 13 left in the laser device mounting region 11 and the wavelength conversion device mounting region 12. Since the Au film 13 in the spacing between each micro bump 42, that is, in the bottom of each groove 13a (see Figure 8(e)), is left unremoved so that the lower parts of the micro bumps 42 are interconnected by the Au film 13, the entire laser device mounting region 11 can be made to conduct and function as an electrode. Likewise, the entire wavelength conversion device mounting region 12 also can be made to conduct and function as an electrode. In this way, the laser device mounting region 11 and the wavelength conversion device mounting region 12, where the large number of micro bumps are formed as described above, form the bonding portions 40 and 41, respectively.

When a pattern other than the pattern of micro bumps 42, for example, an interconnection pattern, is to be formed on the surface of the first silicon substrate 10, first the resist film 14 formed in the step of Figure 8(b) is patterned to match the interconnection pattern to be formed. Then, by etching the resist film 14 in the step of Figure 8(c), the interconnection pattern, etc. can be formed. According to the bonding portion forming process described above, the bonding portions, each having a micro-bump structure formed from a metal material, and the interconnection pattern, etc. can be formed together in an efficient manner on the surface of the first silicon substrate 10.

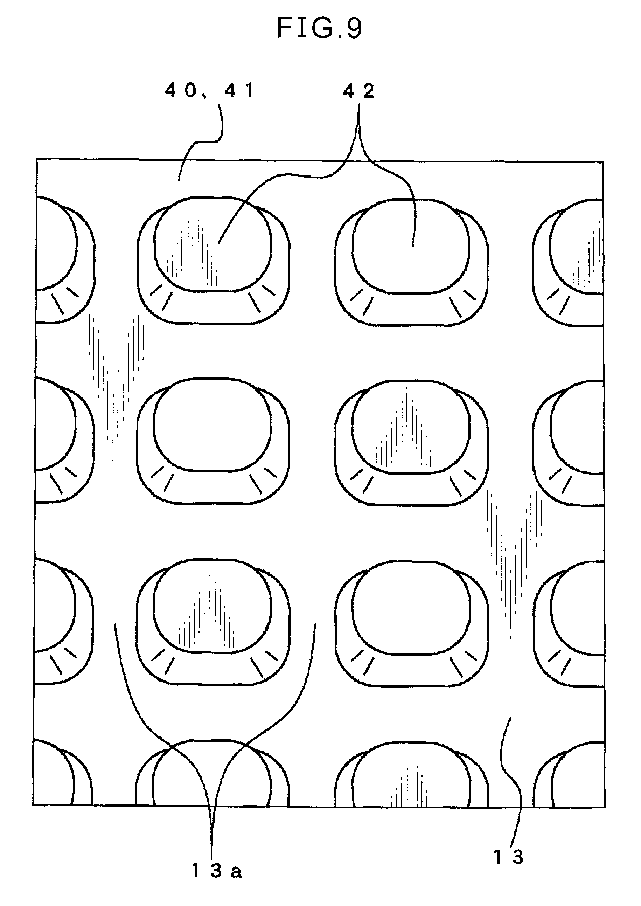

Figure 9 is a perspective view showing a portion of the bonding portion 40 or 41 in enlarged form.

The micro-bump structure of the bonding portions 40 and 41 will be described with reference to Figure 9. The individual micro bumps are substantially cylindrical in shape and formed from Au; as an example, each micro bump is formed with a diameter of about 8 µm and a height of about 2 µm. Since the Au film 13 is left in the spacing between each micro bump 42, that is, in the bottom of each groove 13a, as described above, the micro bumps 42 are mechanically and electrically interconnected by the Au film 13, and the structure is thus formed as an integral one-piece electrode. The micro bumps may be formed using other metal material such as In (indium).

An outline and/or the principle of the surface activated bonding technique employed in the component mounting step performed using the bonding portions of the micro-bump structure will be described below.

The surface activated bonding technique is a technique that activates material surfaces by removing inactive layers, such as oxides, dirt (contaminants), etc. covering the material surfaces by plasma or other means, and that bonds the surfaces together by causing atoms having high surface energy to contact each other and by utilizing the adhesion forces acting between the atoms. However, in the case of flat bonding surfaces, there are cases where it is difficult to accomplish surface activated bonding unless the surfaces are heated to some degree (100 to 150°C). In the fabrication process of the optical device 1, in order to lower the bonding temperature, the micro bumps 42 are formed from Au, a material that easily deforms plastically, on one side of the bonding surface, that is, on the bonding portions 40 and 41 of the first silicon substrate 10, so that the bonding can be accomplished at normal temperatures.

Films of oxides, contaminants, etc. remain adhered to the actual surface (including the bonding portions 40 and 41). Therefore, plasma cleaning or ion-beam sputter etching is performed, and the surfaces of the bonding portions 40 and 41 are activated, thus putting the surfaces of the bonding portions 40 and 41 in an activated condition in which the atoms having bonds are exposed on the surfaces. In this condition, interatomic bonding can be accomplished by just bringing the electrodes of the laser device 3 and the wavelength conversion device 20 into contact with the respective bonding portions 40 and 41.

Since this surface activated bonding does not require heating for bonding, the following advantages are offered.
1. Component breakage due to the residual stress arising from the difference in thermal expansion coefficient does not occur.
2. Since components are not subjected to thermal stress, component functional degradation does not occur.
3. Since the bonding is a solid-phase bonding that does not require heating, component misalignment does not occur during mounting.
4. No thermal effects are caused to other components.
5. Since the atoms are directly bonded together, the bonding layer does not deteriorate with time.

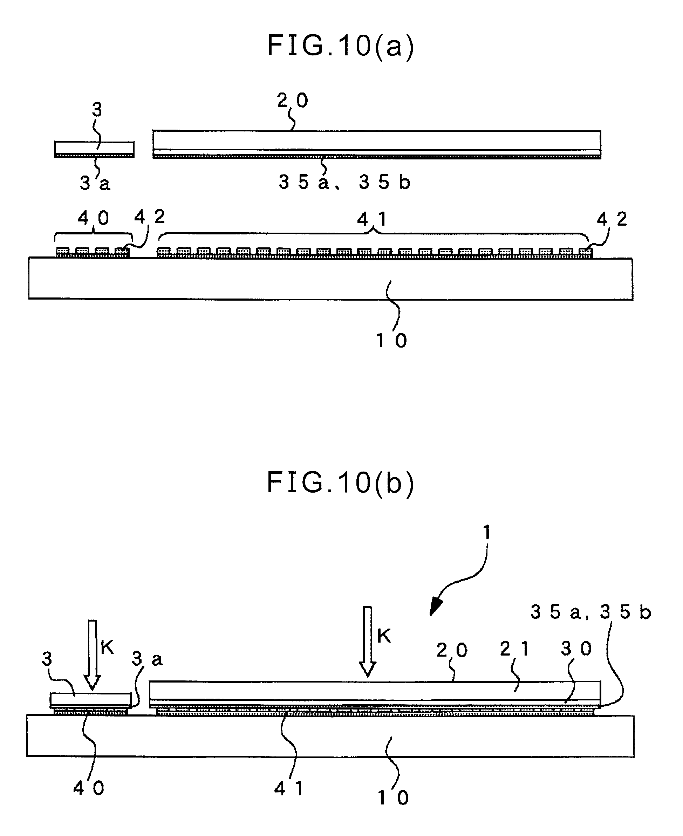

Figures 10(a) and 10(b) are side views for explaining the mounting process for mounting the laser device and the wavelength conversion device on the first silicon substrate.

As shown in Figure 10(a), the bonding portions 40 and 41 are formed on the first silicon substrate 10, and the large number of micro bumps 42 are formed on the bonding portions 40 and 41 in accordance with the earlier described process. Before bonding, the bonding portions 40 and 41 of the first silicon substrate 10 and the electrodes on the bonding surfaces of the laser device 3 and the wavelength conversion device 20 are cleaned by argon plasma, and the respective surfaces are activated. An Au film 3a is formed as the electrode on the bonding surface on the underside of the laser device 3. Likewise, the Au films 35a and 35b (see Figure 3) are formed on the bonding surface on the underside of the wavelength conversion device 20.

Next, as shown in Figure 10(b), the laser device 3 is placed with the Au film 3a facing the bonding portion 40 of the first silicon substrate 10, and the wavelength conversion device 20 is placed with the Au films 35a and 35b on the underside thereof facing the bonding portion 41. Next, the Au film 3a of the laser device 3 is brought into contact with the bonding portion 40 of the first silicon substrate 10, and the Au films 35a and 35b on the underside of the wavelength conversion device 20 are brought into contact with the bonding portion 41; in this condition, the laser device 3 and the wavelength conversion device 20 are pressed onto the first silicon substrate 10 by applying a prescribed load K. As a result, the bonding portion 40 of the first silicon substrate 10 and the Au film 3a of the laser device 3, and also the bonding portion 40 and the Au films 35a and 35b on the underside of the wavelength conversion device 20, are bonded together at normal temperatures, completing the mounting of the laser device 3 and the wavelength conversion device 20 on the silicon substrate 10. At this time, it is important to precisely align the position of the laser device 3 with the position of the wavelength conversion device 20 so that they are optically coupled to each other in a secure manner.

It thus becomes possible to fabricate the optical device 1 by utilizing the many advantages of the surface activated bonding technique. The above has described the first optical device mounting step for mounting the laser device 3, i.e., the first optical element, on the first silicon substrate 10, and the second optical device mounting step for mounting the wavelength conversion device 20, i.e., the second optical element, on the first silicon substrate 10.

Next, a description will be given of the improvements made to the characteristics of the optical device 1 versus temperature changes. As shown in Figure 10(b), the wavelength conversion device 20 incorporated in the optical device 1 is manufactured by laminating the waveguide substrate 30 to the second silicon substrate 21, and the wavelength conversion device 20 is mounted on the first silicon substrate 10 in such a manner that the waveguide substrate 30 faces the first silicon substrate 10. This results in a structure in which the waveguide substrate 30 is sandwiched between the first silicon substrate 10 and the second silicon substrate 21.

The waveguide substrate 30 is formed from LN doped with MgO, as previously described, and its thermal expansion coefficient in the longitudinal direction along which the light travels is significantly different from the thermal expansion coefficient of the first and second silicon substrates 10 and 21. More specifically, the thermal expansion coefficient of the waveguide substrate 30 formed from LN doped with MgO is larger than the thermal expansion coefficient of the first and second silicon substrates 10 and 21.

The waveguide substrate 30 is sandwiched between the first and second silicon substrates 10 and 21, but the thermal expansion coefficient of the former is different from the thermal expansion coefficient of the latter, as just described. Accordingly, when the ambient temperature changes, the waveguide substrate 30 changes in length to a greater degree than the first and second silicon substrates 10 and 21 do. However, since the waveguide substrate 30 is extremely thin (2.5 to 5.0 µm in thickness), the change in the length of the waveguide substrate 30 is restrained by the first and second silicon substrates 10 and 21, and thus the occurrence of the stresses B and B' (see Figure 12) is suppressed, so that the deformation of the wavelength conversion device 20 can be minimized.

As a result, the stress acting on the wavelength conversion device 20 is reduced, reducing the chance for incurring deformation, distortion, etc., and thus making it possible to prevent misalignment from occurring between the laser device 3 and the wavelength conversion device 20. In like manner, it also becomes possible to prevent misalignment from occurring between the wavelength conversion device 20 and the optical fiber (not shown) into which the laser light emerging from the wavelength conversion device 20 is coupled. That is, with the above-described structure of the optical device 1, problems, such as the misalignment in optical coupling between components, shifting in conversion wavelength, etc. can be solved.

The inventor performed a steady-state thermal analysis by conducting a simplified simulation in order to verify how much the wavelength conversion device 20 used in the optical device 1 would deform due to the stress arising from a change in ambient temperature, in comparison with a wavelength conversion device used in an optical device prepared for comparison purposes. The simulation results showed that, in the case of the wavelength conversion device 20 used in the optical device 1, the amount of deformation arising from a change in temperature would be reduced by a factor of about 4, compared with the wavelength conversion device used in the comparative optical device.

In the simulation, the wavelength conversion device formed principally of LN as depicted in Figure 12 was used as the wavelength conversion device for the comparative optical device, and this wavelength conversion device was mounted by bonding to the silicon substrate. The wavelength conversion device 20 used in the optical device 1 and the wavelength conversion device used in the comparative optical device were identical in size. Further, the silicon substrate used in the optical device 1 and the silicon substrate used in the comparative optical device were identical in structure and size, and the amount of deformation was measured by securely fixing the end faces of each silicon substrate.

As described above, according to the optical device 1 and the method for manufacturing the optical device 1, since the waveguide substrate 30 is sandwiched between the first silicon substrate 10 and the second silicon substrate 21, if the ambient temperature changes, the wavelength conversion device 20 is restrained from deforming, and it thus becomes possible to prevent the occurrence of misalignment and prevent shifting from occurring in the characteristics of the optical waveguide. As a result, a high-performance and high-reliability optical device that is resistant to ambient temperature changes can be provided.

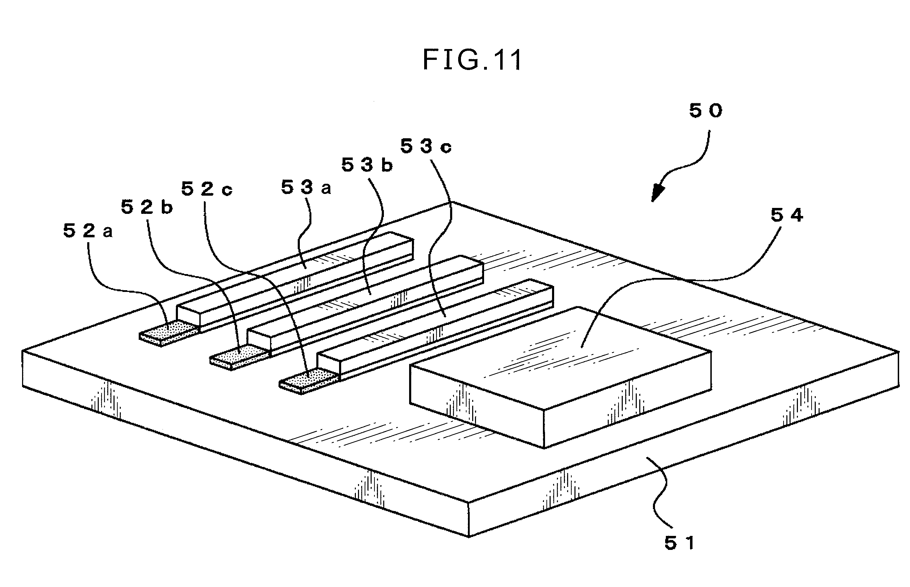

Figure 11 is a schematic perspective view showing another optical device 50.

As shown in Figure 11, the optical device 50 is manufactured by mounting a plurality of laser devices 52a to 52c, a plurality of wavelength conversion devices 53a to 53c, and a driver IC 54 on the surface of a single silicon substrate 51. The individual laser devices and wavelength conversion devices are identical in structure to the corresponding devices used in the optical device 1.

The laser devices 52a to 52c and the wavelength conversion devices 53a to 53c are each mounted on the silicon substrate 51 via a bonding portion of a micro-bump structure in the same manner as in the optical device 1. The driver IC 54 is also mounted on the silicon substrate 51 by using a micro-bump structure, but may be mounted by using some other suitable mounting method.

The plurality of laser devices 52a to 52c are each formed from a material such as GaAs or GaN, and emit light at three different wavelengths corresponding to the three primary colors of light, R, G, and B. The plurality of wavelength conversion devices 53a to 53c are arranged in corresponding relationship to the respective colors R, G, and B, are optically coupled to the respective laser devices 52a to 52c, and convert the laser light into the laser lights of the respective colors R, G, and B. The R, G, and B laser lights emerge from the exit faces of the respective wavelength conversion devices 53a to 53c, but the optical fibers, etc. into which these laser lights are coupled are not shown here. In the illustrated example, the wavelength conversion device for the R color may be omitted, and the light of the R component from the laser device may be directly output.

The driver IC 54 contains circuitry for driving the laser devices 52a to 52c, but it is preferable that it also contains at least core circuitry such as a CPU and memory. Alternatively, the core circuitry such as a CPU and memory may be formed in the silicon substrate 51. A heat sink for dissipating heat (not shown) is mounted on the underside of the silicon substrate 51.

As described above, the optical device 50 is a compact optical device constructed by efficiently integrating the plurality of optical elements on the silicon substrate 51, and can therefore be used advantageously in such apparatus as a full-color portable laser projector. Further, since the basic construction of the optical device 50 is the same as that of the optical device 1, there is offered the same effect as achieved by the optical device 1.

The optical devices 1 and 50 have each been described above by taking as an example the case where a micro-bump structure using Au (gold) as a metal material is used as the bonding portion for bonding the wavelength conversion device, an example of the second optical element, to the first silicon substrate. However, the invention is not limited to this particular example; for example, an adhesive layer formed from an adhesive material may be used as the bonding portion for bonding the wavelength conversion device, an example of the second optical element, to the first silicon substrate. Even in the case of the adhesive layer, since the waveguide substrate of the second optical element is sandwiched between the first silicon substrate and the second silicon substrate, if the ambient temperature changes, the wavelength conversion device 20 is restrained from deforming, and it thus becomes possible to prevent the occurrence of misalignment and prevent shifting from occurring in the characteristics of the optical waveguide. As a result, a high-performance and high-reliability optical device that is resistant to ambient temperature changes can be provided.

While the optical devices 1 and 50 have each been described by taking as an example the wavelength conversion device having a ridge-shaped structure, it will be recognized that the wavelength conversion device is not limited to the ridge-shaped type, but use may be made, for example, of an embedded-type wavelength conversion device or a wavelength conversion device manufactured by a proton-exchange method. Further, the second optical element is not limited to the wavelength conversion device, but an optical element having other functions may be used.

The optical devices 1 and 50 can be widely used as short-wavelength laser light sources, such as blue or green laser light sources, in a variety of applications including laser projectors, laser light illumination equipment, optical tweezers, and the like.

## Claims

1. An optical device comprising:
a first optical element (3);
a second optical element (20) optically coupled to said first optical element; and
a first silicon substrate (10) on which said first optical element and said second optical element are mounted, wherein
said second optical element includes a second silicon substrate (21) and a waveguide substrate (30) laminated to said second silicon substrate, and
said second optical element is mounted on said first silicon substrate in such a manner that said waveguide substrate faces said first silicon substrate.

2. The optical device according to claim 1, wherein the thickness of said weveguide substrate is in the range of 1/6 to 1/400 of the thickness of said second silicon substrate.

3. The optical device according to claim 1 or 2, further comprising a bonding portion (41) formed from a metal material and provided on said first silicon substrate, wherein said second optical element is bonded to said bonding portion by using a surface activated bonding technique.

4. The optical device according to claim 3, wherein said bonding portion has a micro-bump structure.

5. The optical device according to claim 3 or 4, wherein said metal material is Au.

6. The optical device according to any of claims 1 to 5, wherein said first optical element is a laser device (3), and said second optical element is a wavelength conversion device (20).

7. A method for manufacturing an optical device in which a first optical element (3) and a second optical element (20) optically coupled to said first optical element are mounted on a first silicon substrate (10), the method comprising:
forming said second optical element by laminating together a second silicon substrate (21) and a waveguide substrate (30);
mounting said first optical element on said first silicon substrate; and
mounting said second optical element on said first silicon substrate in such a manner that said waveguide substrate faces said first silicon substrate.

8. The method according to claim 7, wherein the thickness of said waveguide substrate is in the range of 1/6 to 1/400 of the thickness of said second silicon substrate.

9. The method according to claim 7 or 8, further comprising forming on said first silicon substrate a bonding portion (41) formed from a metal material, wherein when mounting said second optical element, said second optical element is bonded to said bonding portion by using a surface activated bonding technique.

10. The method according to claim 9, wherein said bonding portion has a micro-bump structure.

11. The method according to claim 9 or 10, wherein said metal material is Au.

12. The method according to any of claims 7 to 11, wherein said first optical element is a laser device (3), and said second optical element is a wavelength conversion device (20).
